(19) Europäisches Patentamt / European Patent Office / Office européen des brevets

(11) EP 2 333 003 A1

(12) EUROPEAN PATENT APPLICATION

(43) Date of publication:
**15.06.2011 Bulletin 2011/24**

(51) Int Cl.:
***C08G 73/02*** *(2006.01)* ***C08G 61/12*** *(2006.01)*
***C08K 5/00*** *(2006.01)* ***C08L 77/00*** *(2006.01)*

(21) Application number: **09015288.5**

(22) Date of filing: **10.12.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicant: **Stichting Dutch Polymer Institute**
**5612 AB Eindhoven (NL)**

(72) Inventor: **The designation of the inventor has not yet been filed**

(74) Representative: **Renkema, Jaap et al**
**IPecunia Patents B.V.**
**P.O. Box 593**
**6160 AN Geleen (NL)**

# (54) Process for the preparation of a conductive polymer composition

(57) The present invention relates to a process for the preparation of a conductive polymer composition, comprising a polyamide, a conductive polymer and a conductive filler, wherein the process comprises the following steps:

A) Providing a solution, comprising a strong acid, a polyamide, a conductive polymer and a conductive filler,
B) Subjecting the conductive polymer composition from step A) to a shaping step selected from the group consisting of casting, spin coating, spinning or extrusion;
C) Contact the conductive polymer composition from step B) with water, whereby the conductive polymer composition is precipitated and/or quenched;
D) Optionally wash and/or dry the precipitated conductive polymer composition from step C).

EP 2 333 003 A1

## Description

The present Invention relates to a process for the preparation of a conductive polymer composition. The present Invention also relates to conductive polymer compositions, comprising a polyamide, as well as to articles prepared from the conductive polymer compositions.

A process for preparing a conductive polymer composition is known In the art. US 5,196.144 discloses a method to obtain a solution of conductive polyaniline and polypara (phenylene terephtalamide) (PPTA) in a strong acid. PPTA is added to Improve the performance characteristics of the solid polyaniline articles, e.g. improve tear strength.

US 2006/0188718 discloses a method to obtain composite fibers of aromatic polyamide and carbon nanotubes. In these composites carbon nanotubes are used to reinforce the fibers.

Ramesh et a/. (J. Phys. Chem. B 2004, 108, 8794-8798) disclose a method to dissolve pristine single walled carbon nanotubes in strong acids.

WO 2009/033933 disclose a process to obtain a conductive polymer composition, comprising the steps of a) providing a latex containing a conductive polymer, b) mixing the latex from a) with an aqueous latex of a polymer, c) removing water from the so obtained mixture; d) heating the product from c) to a temperature at which the polymer added in step b) flows and e) processing and/or solidifying the product from step d) into a desired form. It takes considerable preparations to obtain a well dispersed latex and at least 5 steps are needed to arrive at the desired form.

The above mentioned state of the art does not disclose a simple process for making a conductive polymer composition having a low percolation threshold, while the obtained solid conductive polymer composition has low amounts of a conductive polymer and a conductive filler.

There is a need for a simple process which results in 1) a conductive polymer composition with low amounts of conductive polymer and conductive filler and 2) a process which enables to make different conductive articles having the form of films, fibers, rods, tapes and the like.

The present invention relates to a process for the preparation of a conductive polymer composition, comprising a polyamide, a conductive polymer and a conductive filler, wherein the process comprises the following steps:

A) Providing a solution, comprising a strong acid, a polyamide (compound i), a conductive polymer (compound ii) and a conductive filler (compound iii);

B) Subjecting the conductive polymer composition from step A) to a shaping step selected from the group of casting, coating, spinning or extrusion;

C) Contacting the conductive polymer composition from step B) with water, whereby the conductive polymer composition is precipitated and/or quenched;

D) Optionally wash and/or dry the precipitated conductive polymer composition from step C).

The present invention has the advantage that a solution is obtained of a polyamide, a conductive polymer and a conductive filler. The obtained solid conductive polymer composition has a percolation threshold at low amounts of conductive polymer and conductive filler. The solution can be shaped Into film, fibers, rods, tapes and the like.

The steps of the process of the present invention will be separately discussed below.

The weight percentage (wt%) of a component or components is here and hereinafter defined as the wt% of that component or these components relative to the accumulated weight of components i-iii, unless explicitly stated otherwise. *When a weight percentage of a component of components Is used relative to the conductive polymer composition, the conductive polymer composition Is based on a dry sample* (*containing less than 1 wt% water*)*,*

Step A): Various acids have been found to be suitable solvents for the components i-iii used in this Invention. Typically, complete dissolution requires strong acids, although fine dispersions have also been found to be effective. Examples of strong acids are chlorosulfonic acid, fluorosulfonic acid, sulfuric acid, trifluoromethylsulfonic acid, methylsulfonic acid, camphorsulfonic acid or nitric acid. All of the mentioned strong acids might be concentrated or if applicable fuming. The strong acid might be used alone or if applicable in combination. Generally it is preferred to select strong acids such as concentrated sulfuric acid or chlorosulfonic acid that completely dissolve or at least finely disperse the components used, without substantial degradation of the components. It is within the skill of the art based on the present disclosure to screen various strong acids, for their ability to dissolve or finely disperse the components i-iii used. Degradation of the polymeric components used can be Judged from infrared spectra and decrease of viscosity of the solution or of the polymer obtained from the solution. Most preferred solvent is chlorosulfonic acid

A polyamide is a polymer containing amide moieties. These amide moieties are generally formed from the reaction of a carboxylic acid or acyl halides and an amine. The reaction is a polycondensation reaction, whereby water is formed as the reaction product, which needs to be removed from the mixture to obtain a high degree of polymerization. Polyamides used in the present invention can be an aliphatic polyamide or an aromatic polyamide.

Examples of aliphatic polyamides are the common polyamides such as polyamide 6, polyamide 11, polyamide 12, polyamide 4,6, polyamide 6,6, polyamide 6,9, polyamide 6,10, polyamide 6,12, but the potential combinations may

extend beyond these. Copolymers of polyamides with other monomers or block-copolymers of polyamides can also be mentioned as examples of polyamides that can be used in the process of the present invention.

Aromatic polyamides are also known as aramids. Aramids are generally prepared by the reaction between a molecule containing an aromatic moiety having an amine group and/or a carboxylic acid halide group. The most well-known examples of aramids are Nomex, Kevlar, Twaron, X-fiper and New Star). Nomex, X-Flper, New Star and Teijinconex contain predominantly the meta-linkage and are poly-*metaphenylene isophtalamides* (MPIA). Kevlar and Twaron are both *p*-phenylene terephtalamides (PPTA). PPTA is a product of p-phenylene diamine (PPD) and terephtaloyl dichloride (TDC or TCl).

The viscosity average molecular weight of the polyamides used in the present invention preferably ranges between $10^4$ to about $10^9$ g/mol, more preferably between $10^5$ and $10^7$. The viscosity average molecular weight of the polyamide is calculated from the Mark-Houwink equation:

$$[\eta]=KMW^a$$

Wherein: [η] is the intrinsic viscosity; $M_w$ is the viscosity averaged molecular weight; and K and a are constants which can be found in literature, like for example the Polymer Data Handbook, edited by James E. Mark, published by Oxford University Books (1999), (http://www.gme.ufsc.br/~minatti/docs/20061/polymer data handbook.pdf).

For example for the system nylon 6,6/formic acid at 25 °C the value for K is 35.3 ml/g and the value for a = 0.786.

The intrinsic viscosity can be determined from the following equation,

$$[\eta] = \frac{2}{C}(\eta_{rel}^{1/2} - 1)$$

Wherein: [η] is the intrinsic viscosity; C is the polymer concentration; and $\eta_{rel}$ is the relative viscosity of the polymer solution (i.e. the viscosity of the polymer relative to the viscosity of the pure solvent)

The relative viscosity, $\eta_{rel}$ may be determined by viscometric measurements using an Ubbelohde viscometer (Test Methods: ISO 3104, ISO 3105, ASTM D 445, ASTM D 446, IP 71, BS 188). The viscosimetric measurements are generally conducted at 25°C, and formic acid is used as a solvent. The relative viscosity may be calculated using the following equation:

$$\eta_r = \frac{\eta}{\eta_0} = \frac{t\rho}{t_0\rho_0}.$$

Wherein: $\eta_r = \eta_{rel}$; η is the viscosity of the polymer solution; $\eta_0$ = the viscosity of the pure solvent, t is the characteristic flow time of the polymer solution measured with the Ubbelohde viscosimeter, $t_0$ is the characteristic flow time of the pure solvent measured with the Ubbelohde viscosimeter; ρ is the mass density of the polymer solution; and $\rho_0$ is the mass density of the polymer solution.

Preferably aromatic polyamides are used In the present Invention. More preferable a para-polyaramide is used. Most preferable the polyamide is polypara(phenylene terephtalamide).

A conductive polymer is an organic polymer that conducts electricity. Examples of organic conductive polymers are polyacetylenes, polypyrroles, polythiophenes, polyanilines, poly(p-phenylene sulfides), and poly(para-phenylene vinylene)s, Other less well known examples are polyindole, polypyrene, polycarbazole, polyazulene, polyazepine, poly (fluorene)s, and polynaphthalene. Preferably the conductive polymer is selected from polyanilines, polypyrroles, polyacetylenes or polythiophones. Most preferable the conductive polymer is a polyaniline.

Polyaniline le polymerized from the aniline monomer, and can be found In one of three idealized oxidation states: i) leucoemeraldine - white/clear, ii) emeraldine - green or blue or iii) pemigraniline - blue/violet.

In Figure 1, x equals half the degree of polymerization (DP). Leucoemeraldlne with n = 1, m = 0 is the fully reduced state. Pernigraniline is the fully oxidized state (n = 0, m = 1) with imine links instead of amine links.

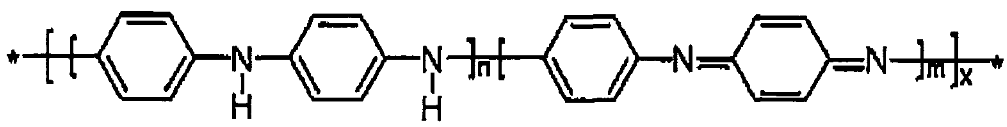

**Figure 1. Main polyaniline structures n+m = 1, x = degree of polymerization.**

The emeraldine (n = m = 0.5) form of polyaniline, often referred to as emeraldine base (EB), is either neutral or doped, with the imine nitrogen protonated by an acid, In the present invention preferably the EB form of polyaniline is used. Most preferably the EB form of polyaniline is protonated by an acid before dissolving it into the strong acid.

A conductive filler is a filler that conducts electricity and does not belong to the group of conductive polymers as described above. The conductive filler may be an inorganic or an organic filler. Preferably an organic filler is used. Examples of organic conductive fillers are conductive carbon filler. Examples of conductive carbon fillers are fullerenes in general and more specific carbon nanotubes, graphene and the like.

In a preferred embodiment of the Invention conductive carbon fillers are used. More preferable carbon nanotubes are used. Carbon nanotubes (CNTs) are allotropes of carbon. There are two main types of nanotubes: single-walled nanotubes (SWNTs) and multi-walled nanotubes (MWNTs). A single wall carbon nanotube is a one-atom thick graphene sheet of graphite (called graphene) rolled up into a seamless cylinder with diameters of the order of a nanometer. This results in a nanostructure where the synthesized length-to-diameter ratio may exceed 1000. Multi-walled nanotubes (MWNT) consist of multiple layers of graphite rolled in on themselves to form a tube shape. In the present invention most preferable single-walled carbon nanotubes are used.

The solution or fine dispersion can be obtained by dissolving the components i-iii in the strong acid in arbitrary order. Preferably the conductive polymer and conductive filler are added before adding the polyamide to the strong acid. Most preferably the conductive filler is added first to the strong acid; secondly the conductive polymer and thirdly the polyamide is added. The solutions are preferably during the process of the invention. Preferably the solution is mechanically stirred when adding the components. As viscosity increases considerably, mixing conditions should be chosen in a way a homogeneous solution or fine dispersion is obtained before starting step B. In a preferred embodiment, the conductive filler is exfoliated before adding the conductive polymer. Exfoliation can be done by intensive mixing the filler for example with the aid of an ultrasonication mixing device.

The solution can be prepared between 0 and 100°C. Preferable the solution is prepared between 10 and 70 °C. Most preferable the solution is prepared at room temperature.

The process of the present invention applies the components i-iii used preferably in an amount between 1 and 90 weight percent (relative to the total of the weight of the solution or fine dispersion), more preferable between 2 and 80 wt%, and most preferable between 5 and 50 wt%.

A preferred embodiment of the present invention is a process in which the following weight percentages are applied; the polyamide between 70 and 99 wt%, the conductive polymer between 1 and 20 wt% and the conductive filler between 0.01 and 10 wt% (relative to components i-iii). In an even more preferred embodiment the following weight percentages are applied; the polyamide between 80 and 98 wt%, the conductive polymer between 2 and 15 wt% and the conductive filler between 0.05 and 5 wt%. In a most preferred embodiment the following weight percentages are applied; the polyamide between 88 and 97 wt%, the conductive polymer between 3 and 10 wt% and the conductive filler between 0.1 and 2 wt%.

Step B): The solution or fine dispersion from step A) can be shaped into different articles. Preferably the shaping step is selected from casting, spincoating, spinning or extrusion. Casting, spin coating, spinning or extrusion from solution or fine dispersion are well known to the man skilled in the art. For example films can be prepared by casting or spin coating the conductive polymer composition / acid solution onto a (glass) substrate. Fibers can be spun using standard spinning equipment. Other shapes, such as rods, can be prepared by standard extrusion techniques.

Step C): The shaped conductive polymer composition from step B) Is subsequently contacted with water. Upon contacting with water the conductive polymer composition will be precipitated and/or quenched into its final shape, such as film, fibers, rods, tapes and the like.

Solid compositions of the invention comprising the conductive polymer composition are prepared by precipitating and/or quenching the conductive polymer composition from the above described strong acid solutions. The addition of a liquid in which the conductive polymer composition is not soluble to the acid solution of the present invention will cause the conductive polymer composition to precipitate. Various liquids can be used, such as water or organic solvents miscible in water, such as methanol, ethanol, acetone, aqueous salt solutions, or even acids in which the conductive polymer composition is not soluble. The rate of addition of this liquid or nonsolvent, temperature, mixing conditions and the like will have an effect of the degree of crystallinity of the resulting solid article. However, a crystalline structure is achieved

over a wide range of these parameters, and the selection of suitable conditions is within the skill of the art in view of the present disclosure.

Though various liquids can be used, most preferably water is being used.

Step D): The solid articles, comprising the conductive polymer composition obtained from step C) can optionally be washed and/or dried. Washing typically takes a few minutes, while drying Is performed at elevated temperature of typically 60 °C for a few hours, typically 12 hours. The man skilled in the art will be able to choose appropriate conditions to obtain solid articles with desired levels of strong acids and liquid content.

The conductive polymer composition is conductive because the conductive polymer and conductive filler form a long-range connectivity throughout the polyamide matrix. When this long-range connectivity is reached the so called percolation threshold is surpassed and the polyamide polymer composition becomes conductive. At the percolation threshold a sudden Increase in conductivity is measured. Typically the difference between conductivity below and above the percolation threshold Is a few orders of magnitude as is shown in table 1 in the examples. As mentioned before, a polyamide with a conductive polymer is known in the art. This polymer composition did not show conductivity. Surprisingly In the present invention it has been found that a combination of a polyamide with a conductive polymer and a conductive filler produces a conductive composition having a percolation threshold at a low weight percentage of the conductive polymer and conductive filler.

A preferred embodiment of the present invention yields a conductive polymer composition in which the following weight percentages are applied; the polyamide between 70 and 99 wt%, the conductive polymer between 1 and 20 wt% and the conductive filler between 0.01 and 5 wt%. In an even more preferred embodiment the following weight percentages In the conductive polymer composition are applied; the polyamide between 80 and 98 wt%, the conductive polymer between 2 and 12 wt% and the conductive filler between 0.03 and 1 wt%. In a most preferred embodiment the following weight percentages in the conductive polymer composition are applied; the polyamide between 88 and 97 wt%, the conductive polymer between 3 and 10 wt% and the conductive filler between 0.05 and 0.5 wt%, and wherein the polyamide is polypara (phenylene terephtalamide).

The conductive polymer composition and articles thereof of the present invention can be used for several applications. For example conductive fibers can be used in filtration, shielding, anti-static, and military applications. Conductive films can also be used in films as well as in more biomedical applications such as medical electrodes. Conductive tapes can be used in Scanning Electron Microscopy, while conductive rods are for example used In printed circuit boards.

The invention is illustrated by the following non-limiting experimental section, examples and comparative experiments.

## Experimental Section

### Material and Techniques

Chlorosulfonic acid was obtained as 98% chlorosulfonic acid from Fluka.

Single walled nanotubes are purchased from Carbon Nanotubes International and used without purification.

Polyaniline in emeraldine base (EB) form having a molecular weight ($M_w$) of 300,000 was purchased from Sigma-Aldrich.

Polypara(phenylene terephtalamide) (PPTA) is TWARON® 1095 and purchased from Teijin Aramid and is used as such.

Conductivity Is measured through the so called four probe technique. In this case the four probe co-linear system using a nanovoltmeter (Keithley 2182A) and programmable current source (Kelthley 6220) at room temperature. The conductivity calculations are performed using appropriate correction factors based on ratio of sample diameter to probe spacing.

## Examples and comparative experiments.

Scheme 1: Making a solution or fine dispersion of protonated EB form of polyaniline in 98% chlorosulfonic acid.

Before using the purchased polyaniline It is protonated. The EB form of polyaniline was protonated by treating it with 1 M NCl in water by rigorous stirring at 500 rpm for 24 hours. The sample was then washed with excess amounts of 1 M HCl followed by washing with acetone till the filtrate becomes colorless. Afterwards, the sample was dried under vacuum at 60°C for 24 hours.

Subsequently the required amount of protonated EB form of polyaniline is mixed with 98% chlorosulfonic acid at room temperature. The mixture is gently stirred with a glass rod, yielding a fine dispersion.

Scheme 2: Making a solution or fine dispersion of single walled nanotubes In 98% chlorosulfonic acid.

The required amount of single walled nanotubes Is added to the 98% chlorosulfonic acid at room temperature.

The mixture Is stirred to finely disperse the single walled nanotubes. Stirring should be maintained until a homogeneous solution has been obtained.

Scheme 3: Making a solution or fine dispersion of single walled nanotubes and protonated EB form of polyaniline in 98% chlorosulfonic acid.

A required amount of single walled nanotubes Is added to the 98% chlorosulfonic acid at room temperature. The mixture is stirred to finely disperse the single walled nanotubes. Stirring should be maintained until a homogeneous solution has been obtained. Subsequently an amount of the protonated EB form of polyaniline Is added to the homogeneous solution in order to obtain the preferred ratio as compared to the single walled nanotubes and amount In the final polymer composition. Mixing should be prolonged for at least 30 minutes at room temperature. The mixture obtained is a solution or fine dispersion.

Experiments.

Experiments 1-6

In order to determine the percolation threshold of polyaniline in PPTA the following experiments were performed.

Experiment 1

PPTA in the required weight % was dissolved In 98% chlorosulfonic acid at room temperature. The mixture was stirred until a homogenous solution was obtained. The solution was either poured on a petridish or viscous drop is stretched on the glass slide. Next the stretched film is quenched in distilled water. As a result the PPTA film is precipitated. After subsequent washing for approximate 15 minutes with excess amounts of water, the sample is dried under vacuum at 60 °C for 12 hours. The conductivity of the obtained sample containing only PPTA was measured, and can be found in Table 1 as Sample 1,

Experiment 2-6

To the fine dispersion obtained from Scheme 1, PPTA was added at room temperatures in amounts the desired weight percentages of polyaniline in the final polymer composition are obtained. Typically the weight percentage (wt%) of PPTA was 1-7 wt% as compared to the total weight of the solution or fine dispersion. It is observed that above 3 wt% of PPTA In the solution or fine dispersion, the viscosity of the solution increased significantly. The solution or fine dispersion was either poured on a petridish or viscous drop Is stretched on the glass slide. Next the stretched film is quenched in distilled water. As a result the polymer composition containing PPTA and polyaniline is precipitated. After subsequent washing for approximate 15 minutes, the sample is dried under vacuum at 60 °C for 12 hours.

The amounts of polyaniline and PPTA were chosen In a way the following weight percentage (wt%) of polyaniline (PANI) in the final polymer composition were obtained: 4, 6, 8, 10 and 12 wt%. The conductivity of the obtained samples were measured, and can be found in Table 1 as Sample 2-6.

Experiments 7-9

In order to determine the percolation threshold of single walled nanotubes In PPTA the following experiments were performed.

To the homogenous solution obtained from Scheme 2, PPTA was added at room temperatures in amounts the desired weight percentages of single walled nanotubes in the final polymer composition are obtained, Typically the weight percentage (wt%) of PPTA was 1-7 wt% as compared to the total weight of the solution or fine dispersion. It is observed that above 3 wt% of PPTA in the solution or fine dispersion, the viscosity of the solution increased significantly. The solution or fine dispersion was either poured on a petridish or viscous drop is stretched on the glass slide. Next the stretched film is quenched in distilled water. As a result the polymer composition containing PPTA and single walled nanotubes is precipitated. After subsequent washing for approximate 15 minutes, the sample is dried under vacuum at 60 °C for 12 hours.

The amounts of single walled nanotubes and PPTA were chosen in a way the following weight percentage (wt %) of single walled nanotubes (SWNT) in the final polymer composition were obtained: 0.3, 0.6 and 1.0 wt%. The conductivity of the obtained samples was measured, and can be found In Table 1 as Sample 7-9.

Examples 1 and 2: experiments 10-11.

Experiments 10-11

In order to make conductive polymer compositions with minimal amounts of polyaniline and single walled nanotubes the following experiments were performed.

To the solution or fine dispersion obtained from Scheme 3, PPTA was added at room temperatures In amounts the desired weight percentages of single walled nanotubes and polyaniline in the final conductive polymer composition are obtained. Typically the weight percentage (wt %) of PPTA was 1-7 wt% as compared to the total weight of the solution or fine dispersion. It is observed that above 3 wt% of PPTA in the solution or fine dispersion, the viscosity of the solution increased significantly. The solution or fine dispersion was either poured on a Petridis or viscous drop Is stretched on the glass slide. Next the stretched film is quenched in distilled water. As a result the conductive polymer composition containing PPTA, single walled nanotubes and polyaniline is precipitated. After subsequent washing for approximate 15 minutes, the sample is dried under vacuum at 60 °C for 12 hours.

The amounts of single walled nanotubes, polyaniline and PPTA were chosen in a way the following weight percentage (wt %) of single walled nanotubes (SWNT) and polyaniline (PANI) in the final conductive polymer composition were obtained: 0.3 wt% of SWNT and 8 wt% of PANI; 1.0 wt% of SWNT and 8 wt% of PANI. The conductivity of the obtained samples was measured, and can be found In Table 1 as Sample 10-11.

Results and Discussion

Results

Table 1 shows the conductivity measurements of Samples 1-11 obtained from the experiments 1-9 and examples 1 and 2 (experiments 10-11). The description mentions the abbreviations of the components present in the polymer composition; PPTA = Polypara (phenylene terephtalamide), PANI = polyaniline and SWNT = single walled nanotubes.

**Table 1.** Conductivity measurements for Samples 1-11.

| Samples # | Description | Conductivity (S/cm) |
|---|---|---|
| 1 | PPTA | $1 \cdot 10^{-12}$ |
| 2 | PPTA + 4 wt% PANI | $1 \cdot 10^{-12}$ |
| 3 | PPTA + 6 wt% PANI | $1 \cdot 10^{-12}$ |
| 4 | PPTA + 8 wt% PANI | $1 \cdot 10^{-12}$ |
| 5 | PPTA + 10 wt% PANI | $1 \cdot 10^{-11}$ |
| 6 | PPTA + 12 wt% PANI | $5.8 \cdot 10^{-5}$ |
| 7 | PPTA + 0.3 wt% SWNT | $1 \cdot 10^{-10}$ |
| 8 | PPTA + 0.6 wt% SWNT | $6 \cdot 10^{-8}$ |
| 9 | PPTA + 1.0 wt% SWNT | $1 \cdot 10^{-3}$ |
| 10/ example 1 | PPTA + 8 wt% PANI + 0.3 wt% SWNT | $2.5\text{-}10^{-5}$ |
| 11/example 2 | PPTA + 8 wt% PANI + 1.0 wt% SWNT | $1 \cdot 10^{-2}$ |

Discussion

From the conductivity measurements shown in Table 1 it becomes clear that the percolation threshold of PANI in PPTA is reached at loadings of 12 wt% (Sample 6). The percolation threshold for SWNT in PPTA is reached at loadings of 0.6 wt% (Sample 8).

Surprisingly when both PANI and SWNT are added the percolation threshold is found at lower amounts compared to adding PANI or SWNT separately (Sample 10). Now PANI loadings of only 8 wt% are needed (in combination with 0.3 wt% of SWNT) as compared to 12 wt% of PANI when added separately. On the other hand SWNT loadings of only 0.3 wt% are needed (in combination with 8 wt% of PANI) as compared to 0.6 wt% of SWNT when added separately.

Andretta et al. (Polymer Communications 1991, 31, 275-278) showed that the use of polyaniline only deteriorates the mechanical properties the mechanical properties of the PPTA-PANI fiber, On the other hand extensive use of SWNT

Is not beneficial from an economical point of view. Therefore this invention may serve as a new process for making conductive polymer compositions yielding a low percolation threshold, having low amounts of a conductive polymer (PANI) and a conductive filler (SWNT).

The conductivity can be tuned by varying the amount of SWNT as is shown in sample 11. Again It can be seen that the combination of PANI and SWNT yields a higher conductivity (Sample 11) when compared to conductivity levels of SWNT only (Sample 9) at the same loadings of SWNT. The conductivity level is one order of magnitude higher.

Without being bound to any theory, it is believed that the combination of a conductive polymer and conductive filler (preferably of high aspect ratio) yields some kind of synergetic effect, which is beneficial for lowering the percolation threshold when compared to adding a conductive polymer or conductive filler separate to the polyamide.

## Claims

**1.** Process for the preparation of a conductive polymer composition, comprising a polyamide, a conductive polymer and a conductive filler, wherein the process comprises the following steps:

A) Providing a solution, comprising a strong acid, a polyamide, a conductive polymer and a conductive filler;
B) Subjecting the conductive polymer composition from step A) to a shaping step selected from the group consisting of casting, spin coating, spinning or extrusion;
C) Contact the conductive polymer composition from step B) with water, whereby the conductive polymer composition is precipitated and/or quenched;
D) Optionally wash and/or dry the precipitated conductive polymer composition from step C).

**2.** Process according to claim 1, wherein the polyamide is an aromatic polyamide,

**3.** Process according to claim 2, wherein the aromatic polyamide is polypara (phenylene terephtalamide).

**4.** Process according to anyone of claims 1-3, wherein the conductive polymer is selected from polyaniline, polypyrrole, polyacetylene or polythiophene.

**5.** Process according to claim 4, wherein the conductive polymer is polyaniline and the molecular weight ($M_w$) of polyaniline Is between 200,000 and 1,500,000 according to ISO 3104.

**6.** Process according to anyone of claims 1-5, wherein the conductive filler is a carbon nanotube.

**7.** Process according to anyone claims 1-6, wherein the strong acid is selected from chlorosulfonic acid, fluorosulfonic acid, sulfuric acid, trifluoromethylsulfonic acid, methylsulfonic acid, camphorsulfonic acid or nitric acid.

**8.** Process according to claim 7, wherein the strong acid is chlorosulfonic acid.

**9.** A conductive polymer composition, comprising a polyamide, a conductive polymer and a conductive filler obtainable by a process according to anyone of claims 1-8.

**10.** A conductive polymer composition, comprising a polyamide, a conductive polymer and a conductive filler.

**11.** A conductive polymer composition according to claim 10, wherein the conductivity Is more than $1.10^{-6}$ S/cm.

**12.** The conductive polymer composition according to anyone claim of 10-11, wherein the polyamide is an aromatic polyamide, the conductive polymer Is polyaniline and the conductive filler is a carbon nanotube.

**13.** The conductive polymer composition according to claim 12, wherein the amount of aromatic polyamide is between 70 and 99 wt% and the amount of polyaniline is between 1 and 20 wt% and the amount of the carbon nanotubes is between 0,01 and 10 wt% of the total weight of the conductive polymer composition.

**14.** The conductive polymer composition according to claim 12, wherein the aromatic polyamide is polypara(phenylene terephtalamide), which is present in an amount between 88 and 97 wt% the amount of polyaniline is between 3 and 10 wt% and the amount of the carbon nanotubes is between 0.05 and 0.5 wt% of the total weight of the conductive polymer composition.

**15.** Article in the form of a fiber, tape, rod or film comprising a conductive polymer composition according to anyone claims 9-14 or a conductive polymer composition obtained by a process according to anyone claims 1-8.

Europäisches Patentamt
European Patent Office
Office européen des brevets

# EUROPEAN SEARCH REPORT

Application Number
EP 09 01 5288

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 036 941 A1 (STICHTING DUTCH POLYMER INST [NL]) 18 March 2009 (2009-03-18)<br>* paragraph [0001] - paragraph [0051]; claims 1-15; examples *<br>----- | 1-15 | INV.<br>C08G73/02<br>C08G61/12<br>C08K5/00<br>C08L77/00 |
| X | WO 2005/090460 A1 (TEIJIN TWARON BV [NL]; BOERSTOEL HANNEKE [NL]; SWIERENGA HENDRIK [NL];) 29 September 2005 (2005-09-29)<br>* page 1, line 1 - page 8, line 18; claims 1-12; examples *<br>----- | 1-15 | |
| X | US 5 882 566 A (HSU CHE-HSIUNG [US] ET AL) 16 March 1999 (1999-03-16)<br>* column 1, line 13 - column 4, line 60; claims 1-3; examples *<br>----- | 1-15 | |
| X | EP 1 574 551 A1 (TEIJIN LTD [JP]) 14 September 2005 (2005-09-14)<br>* paragraph [0001] - paragraph [0044]; claims 1-16; examples *<br>----- | 1-15 | TECHNICAL FIELDS SEARCHED (IPC) |
| X | WO 03/085049 A1 (CARBON NANOTECHNOLOGIES INC [US]) 16 October 2003 (2003-10-16)<br>* page 1, line 5 - page 7, line 15; claims 1-32; examples *<br>----- | 1-15 | C08G<br>C08K<br>C08L |
| X | US 2004/127637 A1 (HSU CHE-HSIUNG [US] ET AL) 1 July 2004 (2004-07-01)<br>* paragraph [0001] - paragraph [0097]; claims 1-15; examples *<br>----- | 1-15 | |

The present search report has been drawn up for all claims

1

| Place of search | Date of completion of the search | Examiner |
|---|---|---|
| Munich | 16 April 2010 | Kiebooms, Rafaël |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 09 01 5288

This annex lists the patent family members relating to the patent documents cited in the above-mentioned European search report. The members are as contained in the European Patent Office EDP file on
The European Patent Office is in no way liable for these particulars which are merely given for the purpose of information.

16-04-2010

| Patent document cited in search report | Publication date | Patent family member(s) | Publication date |
|---|---|---|---|
| EP 2036941 A1 | 18-03-2009 | WO 2009033933 A2 | 19-03-2009 |
| WO 2005090460 A1 | 29-09-2005 | AT 376571 T | 15-11-2007 |
| | | CN 1934180 A | 21-03-2007 |
| | | DE 602005003019 T2 | 21-08-2008 |
| | | EP 1737905 A1 | 03-01-2007 |
| | | ES 2296169 T3 | 16-04-2008 |
| | | JP 2007529640 T | 25-10-2007 |
| | | KR 20060127211 A | 11-12-2006 |
| | | RU 2376403 C2 | 20-12-2009 |
| | | US 2009252960 A1 | 08-10-2009 |
| | | US 2007160821 A1 | 12-07-2007 |
| US 5882566 A | 16-03-1999 | NONE | |
| EP 1574551 A1 | 14-09-2005 | AU 2003289145 A1 | 23-06-2004 |
| | | CA 2508577 A1 | 17-06-2004 |
| | | CN 1720295 A | 11-01-2006 |
| | | WO 2004050764 A1 | 17-06-2004 |
| | | JP 4209845 B2 | 14-01-2009 |
| | | KR 20050085337 A | 29-08-2005 |
| | | TW 276649 B | 21-03-2007 |
| | | US 2006188718 A1 | 24-08-2006 |
| WO 03085049 A1 | 16-10-2003 | EP 1461390 A1 | 29-09-2004 |
| | | JP 2005521779 T | 21-07-2005 |
| US 2004127637 A1 | 01-07-2004 | US 2008210910 A1 | 04-09-2008 |
| | | US 2009072201 A1 | 19-03-2009 |
| | | US 2004222413 A1 | 11-11-2004 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5196144 A
- US 20060188718 A
- WO 2009033933 A


### Non-patent literature cited in the description


- **RAMESH.** *J. Phys. Chem. B,* 2004, vol. 108, 8794-8798
- Polymer Data Handbook. Oxford University Books, 1999
- **ANDRETTA et al.** *Polymer Communications,* 1991, vol. 31, 275-278